# EUROPEAN PATENT SPECIFICATION

(11) **EP 1 480 470 B1**
(45) Date of publication and mention of the grant of the patent: **16.05.2007**
(21) Application number: 03380234.9
(22) Date of filing: 21.10.2003
(51) Int. Cl.: H04N 17/04, H04N 7/16, H04N 7/167

(54) **Signal television measuring equipment**
Messgerät für Fernsehsignal
Equipement de mesure pour des signaux de télévision

(30) Priority: 19.05.2003 ES 200301145
(43) Date of publication of application: 24.11.2004
(73) Proprietor: Promax Electronica, S.A., 08907 Hospitalet de Llobregat (ES)
(72) Inventor: Mas Raguer, Antoni, 08907 Barcelona (ES)
(74) Representative: Morgades y Manonelles, Juan Antonio

(56) References cited:
- EP-A- 0 562 295
- US-A1- 2003 012 377
- NEWTEC: "NTC/2179" NEWTEC TECHNICAL SPECIFICATION, [Online] 23 March 1999 (1999-03-23), XP001091425 Be Retrieved from the Internet: <URL:http://www.igp.net/components/ntc2179 .Nxx.umn.pdf> [retrieved on 2004-02-11]
- NEWTEC: "NTC/1041" NEWTEC TECHNICAL SPECIFICATION, [Online] 12 May 2003 (2003-05-12), XP001091426 Be Retrieved from the Internet: <URL:http://www.newtec.be/datashee/ntc.104 1.ds.pdf> [retrieved on 2004-02-11]
- GIACHETTI J-L ET AL: "A COMMON CONDITIONAL ACCESS INTERFACE FOR DIGITAL VIDEO BROADCASTING DECODERS" IEEE TRANSACTIONS ON CONSUMER ELECTRONICS, IEEE INC. NEW YORK, US, vol. 41, no. 3, 1 August 1995 (1995-08-01), pages 836-841, XP000539543 ISSN: 0098-3063
- BOYARKIN A.: 'Promax Measuring Equipment (english and russian version)' 625-NET, [Online] April 2003, Retrieved from the Internet: <URL:http://eng.625-net.ru/content/2003_04/ measure12.htm> [retrieved on 2005-07-22]
- 'PROLINK 4 - ALL IN ONE', [Online] 01 January 2003, Retrieved from the Internet: <URL:http://www.atimco.dk/PROMAX/PLK-4I.PDF > [retrieved on 2005-09-22]

## Description

The present invention refers to a signal television measuring equipment which novel features provide a large number of advantages as it will be fully disclosed in the present specification.

Digital television is based on the TV analog signal into video and audio digital signal conversion using video and audio data compression techniques based on deletion of redundant information.

By way of an example, between one image and the one immediately subsequent only the areas which have been changed are transmitted. Likewise, when a complex sound is transmitted only frequencies having a higher level and masking other fainter sounds to the ear are encoded.

With the resulting data packets of binary values (zeros and ones) grouped in bytes (eight bits) are formed and they are grouped in longer sequences (typically, 204 bytes) referred to as "packets" in which information is included to protect the data in the signal transmission process.

This information included on said packets allows detecting errors due to interferences or noise and, in some cases, the correction of the errors detected on the receiver.

The flow of data packets is called "transport stream" (TS) and it contains the data forming the different services to be transmitted (television programs, radio and data).

Development of digital signal television measuring equipments has gone through several stages as the available devices and technology have evolved. Initially, certain parameters were only measured in the radiofrequency (RF) domain available for the same procedures applied to analog signals (power and C/N relationship).

In a later stage it was possible to measure parameters of the signal in base band related to the signal quality and the possibility of retrieving errors.

Finally, it has been possible to recover original audio and video signals and to show the original image and sound on the measuring equipment itself. Said later stage of the evolution of the digital television signal measuring equipments have result in a significant increased complexity of the measuring equipments that is justified by the necessity for displaying the final result of the transmission process and guaranteeing a correct installation to the final user.

However, one of the disadvantages found on the current measuring equipments is associated with the pay per view television, wherein sophisticated encoding algorithms are applied to block certain services or programs. Said encoding is usually carried out by means of encryption methods through which the keys which are transmitted with the encoded signal are suitably protected allowing to be subsequently unprotected. In pay per view television, the user should carry out a subscription and to use a subscriber's card identifying him/her to be able to receive the decoded signal. Accordingly, encoding of the television digital signal prevents the encoded signals from being displayed by conventional measuring equipments and therefore it is difficult to completely guarantee the quality of a certain installation. Said disadvantage becomes worse in view of the increasingly widespread production of encoded format digital television.

Configuration of the measuring equipments used so far in the art has been therefore forced to be modified. Conventional equipments are thus adapted to a specific type of conditional access in such a way that different equipments are necessary as many cards as issued by different entities, usually cards of the 'Smart Card' type (standard ISO/IEC 7816).

As a consequence, the main disadvantage of this solution is of course the fact that it involves a control program to be specialized for each receiver according to the encoding type to which it is intended. It is therefore complex to provide encoded image and sound from different suppliers in the same measuring equipment due to the difficulty which would involve maintaining a large number of different versions of the same program, as well as the permission and license costs which would be involved in each encoding system.

There are also known conditional access systems in receiving applications. For example, the PCT application WO98/43430 teaches a device for generating and outputting signals which comprises a conventional digital television system. It is provided with a multiplexer receiving a series of input signals, it includes one or more TS and it transmits compressed digital signals to a transmitter in a transmitting centre. The signals received by the receiver are transmitted to an integrated receiver-decoder connected to the television which decodes the compressed MPEG-2 signal into a television signal. The device also includes a conditional access system connected to the multiplexer and to the receiver-decoder. The conditional access system is partially placed in the transmitting centre and partially in the decoder. This allows the contents of digital television from one or more suppliers to be accessed by the final user, by the use of a card of the above mentioned "Smart Card" type (provided by said supplier) which is inserted into the receiver-decoder with which decrypting of signals relating to one or several television programs is thus possible. This conditional access system is adapted only and exclusively to television receivers.

The present invention provides to make the conditional access compatible with the use of measuring equipments for digital encoding and modulation standards (DVB-T/S/C) in use, so that the same measuring equipment may be used directly with different subscriber's cards from different suppliers for displaying and hearing of any type of encoded channel.

One of the main objects of the present, which is defined in claim 1, invention is that the encoded television programs may be displayed to the operator, installer or responsible technician (on condition that he/she has the appropriate subscription cards) so that the installation is completely guaranteed to the final user.

There is provided the integration of the control of a conditional access module of the "Common Interface" (CI) type inside the integrated digital receiver in the same measuring equipment, according to the standards EN 50221 (CENELEC) R 206 001 (CENELEC) and TS 101 699 (ETSI). For this purpose, the equipment has connecting means to said conditional access module, such as a slot, connector or the like.

The configuration of the digital television signal measuring equipment of the present invention essentially consists of a digital signal demodulator and processing means associated with the control of a CI type conditional access module for decoding encrypted signals. The reader allows accessing the encoded signals on detecting the presence of a valid subscriber's card. The measuring equipment also comprises a MPEG-2 decoder, one or several video signal outputs and usually also at least an audio signal output.

While the essential configuration of the equipment includes connecting means to the conditional access module (slot, connector), in one embodiment provision is made for the equipment to have at least an external conditional access module (which includes processing of the encrypted MPEG-2 data). The equipment also includes a MPEG-2 decoder, a control unit adapted to control the conditional access module or modules, and a processor. The conditional access module is adapted to receive cards of the "PC Card" (PCMCIA) type.

With this configuration which is herein described it is possible to adapt the subscriber's card to the receiver for each encrypting system, using the "Common Interface" (CI) system which is provided with an intelligent module, that is to say, said conditional access module (CAM) between the measuring equipment and the subscriber's card. Said conditional access module is provided with the each encoding system specific management and it has a standardised format which may be readily removed. The possibility of being removed allows that the same generic measuring equipment having a socket for the intelligent CAM module may be operated with any encoding system. It is only necessary to use the appropriate CAM module and a valid subscriber's card. The measuring equipment of the present invention therefore has an output encoded "Transport Stream" (TS) to the intelligent module (CAM) and an input decoded "Transport Stream" (TS). Detection of the presence of said subscriber's card, its validation as well as decoding when necessary is carried out the CAM module.

The television signal measuring equipment of the present invention based on the 'Common Interface' (CI) has multiple advantages. On one hand, it allows for keeping a unique design of the circuit and the associated control program, and on the other hand, adaptation to the used encoding system is held by the final user by providing the appropriate CAM module and the subscriber's card.

It is possible to sequentially address several different conditional access systems by means of insertion of a PCMCIA module into the "Common Interface".

According to the invention, there is also provided the possibility of including various demodulators, a multiplexer to select the output signal and various CI interfaces for respective CAM modules.

Alternatively, the processing means comprise a number of MPEG-2 decoders with separate video and audio outputs.

Prototypes designed and tested according to the invention allow to assert that, with a relatively simple configuration, it is achieved that the operator may see and hear any type of signal, whether it is encoded or not, by means of the same measuring equipment, regardless of which supplier is providing it, using different subscriber cards, so that the installation is guaranteed to final user.

Although the invention provides a new digital television signal measuring equipment, it will be understood that it can be further adapted for measuring analog signals. In this case, besides said digital (DVB-T/S/C) demodulator and said MPEG-2 decoder, it may be provided with a PAL/SECAM/NTSC demodulator and a video/audio processor, respectively. In this case, the user of the equipment has the possibility of measuring either digital or analog signals. It will also be understood that the equipment may comprise auxiliary elements such as radio signal receivers, printer outputs, remote control, etc.

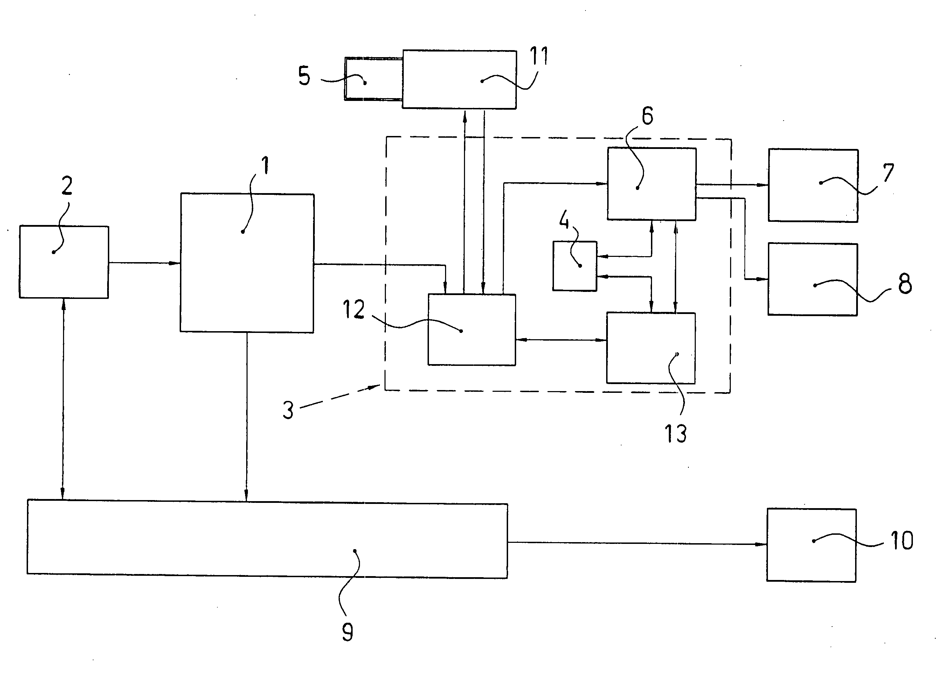

Further details and features of the signal television measuring equipment of present invention will be apparent from the following description, which refers to the accompanying drawing depicting a diagrammatic block diagram showing the different electronic modules in the equipment of the embodiment herein described.

A detailed list of the various parts cited in the present invention used to describe the preferred embodiment of the measuring equipment of the present invention is given below:
(1) DVB-T/C/S signal demodulator;
(2) radiofrequency unit (RF);
(3) processing means;
(4) memory;
(5) "Smart Card" type card;
(6) MPEG-2 format decoder;
(7) video signal;
(8) audio signal;
(9) measuring and control unit;
(10) displaying system;
(11) conditional access modules (CAM), "PC CARD" format;
(12) "Common Interface" (CI) control unit; and
(13) processor.

It is herein described an example of a television signal measuring equipment according to the invention and in connection with the diagrammatic figure that is herein enclosed in which the depicted arrows show interrelation of the different parts of the equipment of the embodiment of the invention (not the electric connection thereof).

There is provided a multifunctional equipment suitable for checking the television signal reception quality. Applications are found in installation works, certification and maintenance of cable and satellite television systems and terrestrial data to guarantee the quality of the analog and digital systems. For this purpose, the equipment that is herein described is capable to analyze various parameters such as the channel power, the carrier/noise (C/N) measuring, synchronism, BER, MER, etc.

The configuration of a preferred embodiment of the digital television signal measuring equipment according to the present invention comprises a digital signal demodulador (1) adapted for receiving satellite or cable DVB terrestrial signal by generating a TS. The signal comes from a radiofrequency unit (RF) (2) which inputs the signal from the antenna, processes the different bands of frequency assigned to television and carries out a frequency conversion to the demodulator input band. The radiofrequency unit (2) also suits the reception level to the demodulator optimum value and it selects the reception frequency. The information, that is to say, the data contained on the received signal is retrieved by the signal demodulador (1) which detects possible errors caused in the transmission and corrects them if possible.

The equipment that is herein described also comprises processing means (3). Said processing means (3) are associated with a CI type interface for decoding encrypted signals. Such conditional access interface enables the access to encrypted signals on detecting the presence of a valid subscriber card (5).

There is also provided a MPEG-2 format decoder (6) which receives a flow of data from which data corresponding to video and audio from the selected program are extracted, i.e. digital signal is converted into video and audio signal. The MPEG-2 decoder (6) also manages further necessary service data for identifying, locating and synchronizing programs. It is also to be noted that the MPEG-2 decoder (6) may include an own memory to carry out the decoding tasks.

Finally, there are provided one or several decoded video signal outputs (7) which is displayed on a monitor screen in the measuring equipment. It is also possible to send said output signal (7) to an external monitor through an appropriate connector. There is also provided one or several decoded audio signal outputs (8) which are output through a speaker in the measuring equipment. Provision is also made for transmitting said signal (8) to an external device through an appropriate connector.

The equipment that is herein described includes a measuring and control unit (9) which manages each of the described modules according to the actions performed by the operator of the equipment. The measuring and control unit (9) configures each element of the equipment so that the requested measurements are carried out and they are appropriately displayed to the user on a displaying system (10). The ways the information is displayed may be, for example, in the form of a graphic display, text display, by means of sounds, lights, etc. depending on the features and performance of the measuring equipment and the user's necessities. The displaying system (10) of the equipment is adapted to show the result of the operation of the measuring equipment (measuring, service or error messages, etc.). It is also possible to send this information to an external system to be processed or stored.

The processing means (3) comprise one or several conditional access (CAM) interfaces according to the "Common Interface" standard (11) in the format of modules of the "PC Card" type. Each of said CAM modules accepts a subscriber's card (5) in accordance with the "Smart Card" standard. The assembly contains all the necessary for decrypting a specific type of television digital signal.

The fact should be especially stressed that, as shown in the diagram, the processing means (3) include the MPEG-2 decoder (6) as well as a "Common Interface" (CI) control unit (12). Said "Common Interface" (CI) control unit (12) is a decrypting system according to DVB recommendations, which is adapted to control the conditional access module or modules (11). The processor (13) runs a specific control program stored in a RAM/ROM memory (4) containing said program and the necessary data for performing it.

By means of the combined action of the processor (13) and the "Common Interface" control unit (12), through said control program, the presence of the CAM module (11) is possible to be detected and whether it contains a valid subscriber's card (5). In addition, said control program is capable to switch the internal/external TS according to whether the signal is encrypted or not. In the event of the internal switching (non encrypted signal) TS is transmitted directly from the demodulator (1) to the MPEG-2 decoder (6). If the signal is otherwise encrypted, the TS is transmitted from the demodulator (1) to the control unit of the CAM module (12) and, once decrypted, from the CAM module (12) to the decoder (6).

The processing means (3) comprise a circuit fitted on the measuring equipment having a program associated therewith. It is understood that different integration degrees of the different described modules are falling within the scope of the invention.

According to a first variant of the equipment of the invention, there are provided several CI format interfaces (12) for external CAM modules (11), that is to say, several sockets are provided for different CAM modules (11) so that a greater versatility is provided for accessing the signal from different suppliers. In such a case, the TS is unique, and therefore the access is sequential instead of being simultaneous.

According to a second variant of the equipment of the invention, there are provided several DVB-T/S/C demodulators (1) with a multiplexer for selecting the output.

According to a third variant of the equipment of the invention, there is envisaged the processing means (3) include several MPEG-2 decoders (6) with separate video and audio outputs.

Other possible variants may be carried out including some or all of the previously described variants.

While it is not shown in the graph for the sake of clarity, in a detailed embodiment the described equipment may include other elements such as a TS switch, a connector according to "PC Card" standard, a "PC Card" controller. The external CAM module (11) includes a TS decrypting processor, a "Smart Card" control unit, and a connector for "Smart Card" subscriber's card (ISO/IEC 7816). Provision is also made for further auxiliary elements such as radio signal receivers, printing outputs, remote control, etc.

Once having been sufficiently described what the signal television measuring equipment of the present invention in accordance to the enclosed drawings, it is understood that any detail modification can be introduced as appropriate, without departing from the scope of the invention as defined in the appended claims.

## Claims

1. - Equipment for measuring television signals comprising at least a digital signal demodulator (1), and processing means (3) associated with a common interface (CI) type interface for decoding encrypted signals which allows the access thereto on detecting the presence of a valid subscriber's card (5), **characterized in that** said processing means (3) comprise:
- connection means of at least an external conditional access module of the "PC Card" type (11);
- at least one MPEG-2 decoder (6) with separate video and audio outputs (7, 8) intended for displaying and reproducing the audio of any type of coded channels using directly the same measuring equipment with different subscriber's cards from different suppliers;
- a control unit (12) of the common interface (CI) type adapted to control the conditional access module or modules (11); and
- a processor (13).

2. - Equipment for measuring television signals as claimed in claim 1, **characterized in that** said equipment includes at least an external conditional access module of the "PC Card" type (11).

3. - Equipment for measuring television signals as claimed in claim 2, **characterized in that** said module of conditional access (11) is adapted to receive cards (5) of the "Smart Card" type.

4. - Equipment for measuring television signals as claimed in claim 1, **characterized in that** it also comprises at least one audio signal output (8).

5. - Equipment for measuring television signals as claimed in claim 1 or 4, **characterized in that** it comprises various demodulators (1) and a multiplexer to select the output signal (7, 8).

## Patentansprüche

1. Messgerät für Fernsehsignale, bestehend aus mindestens einem digitalen Demodulator (1) und Verarbeitungsmitteln (3) in Verbindung mit einem *Common Interface* (CI) zur Dekodierung von verschlüsselten Signalen, um den Zugang zu diesen durch Erkennen einer gültigen Abo-Karte (5) zu ermöglichen, **dadurch gekennzeichnet, dass** diese Verarbeitungsmittel (3) Folgendes umfassen:
- Verbindungsmittel mit mindestens einem externen Conditional Access Module vom Typ "PC Card" (11);
- mindestens einen MPEG-2-Decoder (6) mit getrennten Video- und Audioausgängen (7, 8) zur Anzeige und Wiedergabe der Audiodaten von jeglicher Art von verschlüsselten Kanälen durch direkte Verwendung desselben Messgerätes bei unterschiedlichen Abo-Karten von unterschiedlichen Anbietern;
- eine Steuereinheit (12) für das Common *Interface* (CI) zur Steuerung eines oder mehrerer Conditional Access Module (11);
- einen Prozessor (13).

2. Messgerät für Fernsehsignale nach Anspruch 1, **dadurch gekennzeichnet, dass** dieses Gerät mindestens ein externes Conditional Access Module vom Typ "PC Card" (11) umfasst.

3. Messgerät für Fernsehsignale nach Anspruch 2, **dadurch gekennzeichnet, dass** dieses Conditional Access Module (11) zur Aufnahme von Karten (5) vom Typ "Smart Card" geeignet ist.

4. Messgerät für Fernsehsignale nach Anspruch 1, **dadurch gekennzeichnet, dass** es ebenfalls mindestens einen Audiosignalausgang (8) umfasst.

5. Messgerät für Fernsehsignale nach Anspruch 1 oder 4, **dadurch gekennzeichnet, dass** es verschiedene Demodulatoren (1) sowie einen Multiplexer zur Auswahl der Ausgangssignale (7, 8) umfasst.

## Revendications

1. Appareil pour mesurer les signaux de télévision comprenant au moins un démodulateur de signal numérique (1) et des moyens de traitement (3) associés à une interface de type *interface commune* (IC) pour le décodage de signaux cryptés, qui permet d'y accéder dès qu'il détecte la présence d'une carte d'abonné valable (5), **caractérisé par le fait que** ces moyens de traitement comprennent :
- des connexions pour au moins un module d'accès conditionné externe de type « Carte PC » (11) ;
- au moins un décodeur MPEG-2 (6) avec des sorties vidéo et audio séparées (7, 8) pour afficher et reproduire l'audio de n'importe quel type de chaînes codées en utilisant directement le même appareil de mesure avec différentes cartes d'abonné de différents fournisseurs ;
- une unité de contrôle (12) de type *interface commune* (IC) apte à contrôler le module ou les modules d'accès conditionné (11) et
- un processeur (13).

2. Appareil pour mesurer les signaux de télévision comme indiqué à la revendication 1, **caractérisé par le fait que** ledit appareil comprend au moins un module d'accès conditionné externe de type « Carte PC » (11).

3. Appareil pour mesurer les signaux de télévision comme indiqué à la revendication 2, **caractérisé par le fait que** ledit module d'accès conditionné (11) est apte à accueillir des cartes (5) de type « Carte Smart »

4. Appareil pour mesurer les signaux de télévision comme indiqué à la revendication 1, **caractérisé par le fait qu'**il comprend également au moins une sortie de signal audio (8).

5. Appareil pour mesurer les signaux de télévision comme indiqué à la revendication 1 ou 4, **caractérisé par le fait qu'**il comprend plusieurs démodulateurs (1) et un multiplexeur pour sélectionner le signal de sortie (7, 8).
